# EUROPEAN PATENT SPECIFICATION

(11) **EP 3 114 763 B1**
(45) Date of publication and mention of the grant of the patent: **06.06.2018**
(21) Application number: 14707805.9
(22) Date of filing: 05.03.2014
(51) Int. Cl.: H02M 7/00, H02M 7/48, H02M 7/483

(54) **MULTILEVEL CONVERTER**
MEHRPEGELUMRICHTER
CONVERTISSEUR MULTINIVEAU

(43) Date of publication of application: 11.01.2017
(73) Proprietor: ABB Schweiz AG, 5400 Baden (CH)
(72) Inventor: LACHICHI, Amel, S-722 22 Västerås (SE); DIJKHUIZEN, Frans, S-726 31 Skultuna (SE); HYTTINEN, Mats, S-771 42 Ludvika (SE); NAWAZ, Muhammad, S-724 79 Västerås (SE); CHEN, Nan, S-72213 Västerås (SE)
(74) Representative: Ahrengart, Kenneth
(86) International application number: PCT/EP2014/054205
(87) International publication number: WO 2015/131931

(56) References cited:
- DE-A1- 10 103 031
- US-A1- 2007 045 745
- US-A1- 2013 308 235
- M CLAUS ET AL: "Mehr Spannungsqualität im Netz - mit SVC PLUS", INTERNATIONALER ETG-KONGRESS 2009, 28 October 2009 (2009-10-28), pages 1-35, XP055026076,

## Description

### TECHNICAL FIELD

The invention relates to modular multilevel converters and power electronics building blocks used in valve halls to convert alternating current (AC) into direct current (DC) and vice versa. The power electronics building blocks comprise each at least two sub cells which are configured to be connected in parallel. Each sub cell can be adjusted to either be a full bridge configured sub cell or a half bridge configured sub cell prior to the installation in the power electronics building block. Prior to the installation, the sub cell comes as a modular component that can be configured during the manufacturing and installation of the modular multilevel converter on site.

Such a modular multilevel converter and power electronics building block that can be build by using at least two half- or full bridge configurable sub cells provides a high flexibility and allows for a very compact arrangement of the components within the power electronics building block.

A modular multilevel converter according to the above may be used in all kinds of situations, where it is necessary to convert high voltage direct current into alternating current or vice versa. The modular multilevel converter may also be used to convert direct voltage into a three phase alternating voltage or vice versa. Additionally, the modular multilevel converter may also be used in back-to-back-stations, where AC voltage is first transformed into DC voltage and then back again to AC voltage.

### BACKGROUND

Modular multilevel converters usually have a cuboid-like design and comprise cells in half-bridge configuration. In order to provide a half-bridge cell, the cell need to be configured accordingly during design and then during manufacturing.

WO 2009/115124 illustrates a voltage source converter comprising three phase legs connected to opposite poles of a direct voltage side of the converter. Each phase leg comprises a series connection of switching elements. The switching elements comprise two terminals, two semiconductor devices, in this case IGBT (insulated gate bipolar transistors), connected in parallel with diodes and an energy storing capacitor connected in parallel with the in series connected semiconductor devices and the diodes. One terminal is connected to the mid point between the two semiconductor devices as well as the mid point between the two diodes. The other terminal is connected to the energy storing capacitor. The semiconductor elements has therefore two switching states, namely a first switching state, in which the output voltage is the voltage (U_{c}) across the capacitor and a second switching state in which the output voltage is zero.

The switching element according to WO 2009/115124 is thus half-bridge configured. A full bridge configuration of the switching element is not shown nor is it possible with the shown embodiments of the switching elements to achieve or provide a full bridge switching element. This leads to certain limitations in flexibility and compactness when it comes to the build up of the voltage source converter.

M Claus ET AL: "Mehr Spannungsqualität im Netz - mit SVC PLUS", Internationaler ETG-Kongress 2009, 28 October 2009 discloses a modular multilevel converter with full-bridge modules. Additionally, other known voltage converters or multilevel converters having a cuboid-like design of the phase legs may result in comparably high electric fields around sharp corners, signal delay between sub modules within the multilevel converter cells due to different bus bar or conductor lengths, high stray inductance and difficulties to balance the current.

### SUMMARY

In view of the above it is an object of the present invention to provide a multilevel converter and a power electronics building block, which provides a high flexibility and which is comparably easy to operate.

Advantageously the present invention may provide a power electronics building block, which is compact and versatile.

In the following the terms power electronics building block and modular multilevel converter cell are used an interchangeable manner describing the same component.

The objects are solved by a multilevel converter comprising at least two modular multilevel converter cells or constructional power electronics building blocks according to the independent claim 1.

The power electronics building block for the multilevel converter may comprise a half bridge module having a capacitor unit and at least two semiconductor switches, a gate unit configured to control the semiconductor switches, an electric conductor, at least first and second terminal portions and a sub cell. The sub cell may comprise at least two half bridge modules connected in parallel at their DC link and wherein the electric conductor and the two terminal portions may be configured to be connected to the sub cell in at least two different ways in order to provide a half bridge configured sub cell or a full bridge configured sub cell for the power electronics building block.

In order to build and configure the power electronics building block there is therefore provided the electric conductor and the first and second terminal portions. By connecting the electric conductor and the first and second terminal portions at different positions to the sub cell, the sub cell can then be configured to form a full bridge or half bridge sub cell. The sub cell including the electric conductor and the first and second terminal portions and potentially additional small standard components such as connectors may thus form a building set or building block that allows a high amount of flexibility when building or assembling the multilevel converter cell and thus the modular multilevel converter.

The sub cells may be configured to be mounted on a base in order to form the power electronics building block. The base may have a circular shape.

In an embodiment the power electronics building block may comprise at least two sub cells connected in parallel, wherein the sub cells are arranged symmetrically with respect to each other.

In another embodiment the modular multilevel converter cell may comprise a plurality of sub cells connected in parallel, wherein the sub cells are arranged circularly symmetric with respect to each other.

After the configuration as full bridge or half bridge sub cells, the sub cells may be electrically interconnected with each other, preferably in parallel by DC links and the first and second terminals.

The symmetrical arrangement and the circular symmetric arrangement, preferably in one plane, have the advantage of reduced electric field peaks and of reducing the signal delay between the sub cells.

A circular symmetric arrangement has the advantage of a relatively low stray inductance between capacitor and semiconductor switch, reduced electric field peaks (no sharp corners) and low signal delay. The low stray inductance may increase component reliability. The reduced electric field strength may further result in optimized corona shields and in an optimized insulation design.

In an embodiment, the gate unit may comprise gate drives, each of the gate drives may be assigned to control a semiconductor switch.

When designing a circular layout for the modular multilevel converter cell, the gate unit may in one embodiment be arranged in the centre of the circle in order to achieve a compact design.

The gate drives may be separate from the sub cell. The gate drive may be designed and installed in a way that one gate drive drives several parallel semiconductor switches of different sub cells.

Alternatively the gate drives may be integrated directly in the sub cell, each assigned to control a semiconductor switch.

In an embodiment the electric conductor may comprise a mechanical breaker, which can be either closed or opened prior to the installation of the sub cell in the multilevel converter cell in order to provide a half bridge or a full bridge configured sub cell.

When the mechanical breaker is in the open position, the sub cell is a full bridge configured sub cell.

On the other hand when the mechanical breaker is in the closed position, the sub cell is a half bridge configured sub cell.

Alternatively, it may be possible to remove the electric conductor when the sub cell is configured as a full bridge sub cell.

In a preferred embodiment the electric conductor is connected with a first end at a first midpoint in between the two semiconductor switches of one half bridge module and with a second end at a second midpoint in between the two semiconductor switches of the other half bridge module.

By then connecting the first and second terminal portions at the right positions of the sub cell and by either closing or opening the mechanical breaker a person can easily configure the sub cell as a half bridge sub cell or a full bridge sub cell.

In a further unclaimed example the first terminal portion may be fixedly connected to the first or second midpoint and the second terminal portion may be configured to be fixed to the sub cell at various positions.

The second terminal portion may be connected to the sub cell either in between the capacitor unit and one of the semiconductor switches, to provide a half bridge configured sub cell. The second terminal portion can either be located at DC + side or DC - side.

Alternatively the second terminal portion may be connected to the midpoint in between two semiconductor switches opposite the midpoint where the first terminal portion is arranged in order to provide a full bridge configured sub cell.

In a further embodiment the multilevel converter cell may comprise first and second conductor bridges which are configured to interconnect two half bridge modules in between each side of the corresponding capacitor units, so that the two half bridge modules are connected in parallel by the first and the second conductor bridges.

The conductor bridges may preferably be installed in both configurations of the sub cell; the full bridge and the half bridge configuration of the sub cell.

The conductor bridges may form part of the sub cell or the building block.

Additionally to the above, the connecting positions of the first and second terminal portions may be varied, any other suitable connection for providing the half bridge or full bridge circuit in the sub cell falls within the scope of the invention.

The sub cell may comprise connecting sockets at the correct positions, so that the electric conductor, the first and second terminal portions and the conductor bridges may be easily connected to the standard sub cell, for example via according plugs.

The semiconductor switches may each comprise a diode arranged or connected anti-parallel with the semiconductor switch.

The semiconductor switches may be IGBT's, bimode insulated gate transistors (BIGT), metal oxide semiconductor field effect transistors (MOSFETT), gate turn-off thyristors, or IGCT's. The semiconductor switches may be silicon based or silicon carbide based.

Each sub cell may comprise a corona shield element. Alternatively, the converter cell as a whole may comprise a corona shield element.

The corona shield may thus form part of the sub cell and the building block. Alternatively the corona shield may be formed around the assembled multilevel converter cell.

Having the corona shield element integrated in the sub cell will however result in less parts and thus less complexity during assembly of the modular multilevel converter.

Each multilevel converter cell may be build up according to specific design, as a half bridge cell based multilevel converter cell with half bridge sub cells or a full bridge cell based multilevel converter cell with full bridge sub cells. It is also conceivable to provide hybrid topologies, whereby the multilevel converter may comprise a mix of full bridge- and half bridge configured sub cells connected in series and/or in parallel.

Typically the modular multilevel converter cell may comprise two to six sub cells. Any other amount is however conceivable and falls within the scope of the invention.

The modular multilevel converter cell may be employed in a modular multilevel converter.

The modular multilevel converter may comprise a plurality of multilevel converter arms, for example six, and each multilevel converter arm may comprise a plurality of multilevel converter cells connected in series. Each multilevel converter arm may comprise half bridge configured multilevel converter cells and full bridge configured modular converter cells. Alternatively, each multilevel converter arm may only comprise half bridge- or only full bridge configured modular multilevel converter cells or a mix thereof.

Generally, all terms used in the claims are to be interpreted according to their ordinary meaning in the technical field, unless explicitly defined otherwise herein. All references to "a/an/the element, component, portion, arrangement, cell, etc." are to be interpreted openly as referring to at least one instance of the element, apparatus, component, portion, arrangement, cell, etc., unless explicitly stated otherwise.

### BRIEF DESCRIPTION OF THE DRAWINGS

The invention is now described, by way of example, with reference to the accompanying drawings, in which:
Fig 1 schematically illustrates a half bridge module configured to be used in a sub cell, which sub cell may be used in a modular multilevel converter cell according to the invention;
Fig 2 schematically illustrates a sub cell configured to be used in the modular multilevel converter cell according to the invention;
Fig 3 schematically illustrates a half bridge sub cell ready to be installed in a modular multilevel converter cell according to the invention;
Fig 4 schematically illustrates a full bridge configured sub cell ready to be installed in a modular multilevel converter cell according to the invention;
Fig 5a schematically illustrates a top down view on an embodiment of the modular multilevel converter cell according to the invention;
Fig 5b schematically illustrates a side view on a cross section of the embodiment according to figure 5a, cut along line V-V of figure 5a;
Fig 6a schematically illustrates a top down view on another embodiment of the modular multilevel converter cell according to the invention;
Fig 6b schematically illustrates a side view on a cross section of the embodiment according to figure 6a, cut along line VI-VI of figure 6a;
Fig 7a schematically illustrates a top down view on another embodiment of the modular multilevel converter cell according to the invention;
Fig 7b schematically illustrates a side view on a cross section of the embodiment according to figure 7a, cut along line VII-VII of figure 7a;
Fig 8a schematically illustrates a top down view on a further embodiment of the modular multilevel converter cell according to the invention; and
Fig 8b schematically illustrates a side view on a cross section of the embodiment according to figure 8a, cut along line VIII-VIII of figure 8a.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

In the following the terms power electronics building block and modular multilevel converter cell are used in an interchangeable manner describing the same component.

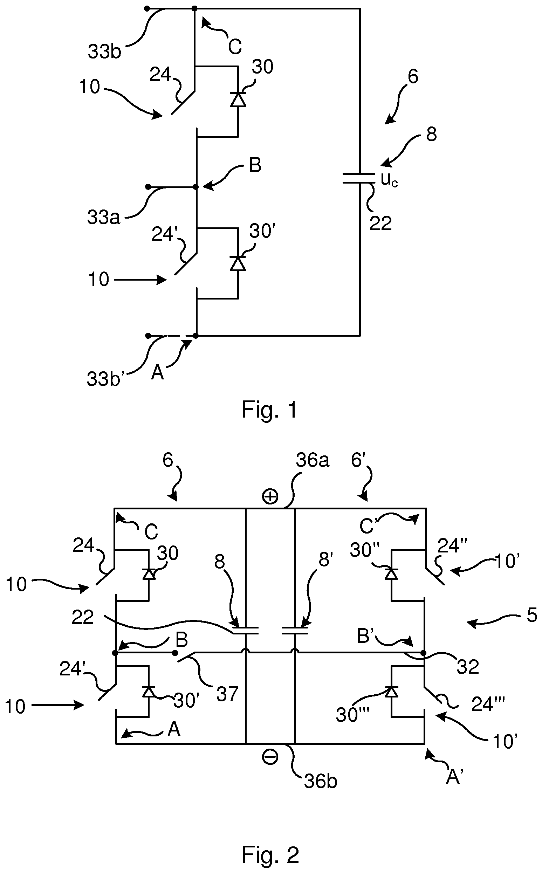

The figures 1 to 8b illustrate a power electronics building block4a, 4b, 4c, 4d and its components respectively. The multilevel converter cell 4a, 4b, 4c, 4d is configured to be used in a modular multilevel converter arm (not shown) of a modular multilevel converter (not shown). The multilevel converter cell 4a, 4b, 4c, 4d may comprise at least two sub cells 5a, 5b, 5a', 5b', a gate unit 12 and a base 16 for mounting the sub cells 5a, 5b, 5a', 5b'. The base 16 may be optional; however some kind of a rack or base structure may be useful for mounting the sub cells 5a, 5b, 5a', 5b'. The multilevel converter cell 4a, 4b, 4c, 4d may further comprise a hermetically sealed casing 17 configured to seal the components of the modular multilevel converter cell 4a, 4b, 4c, 4d from outer influences.

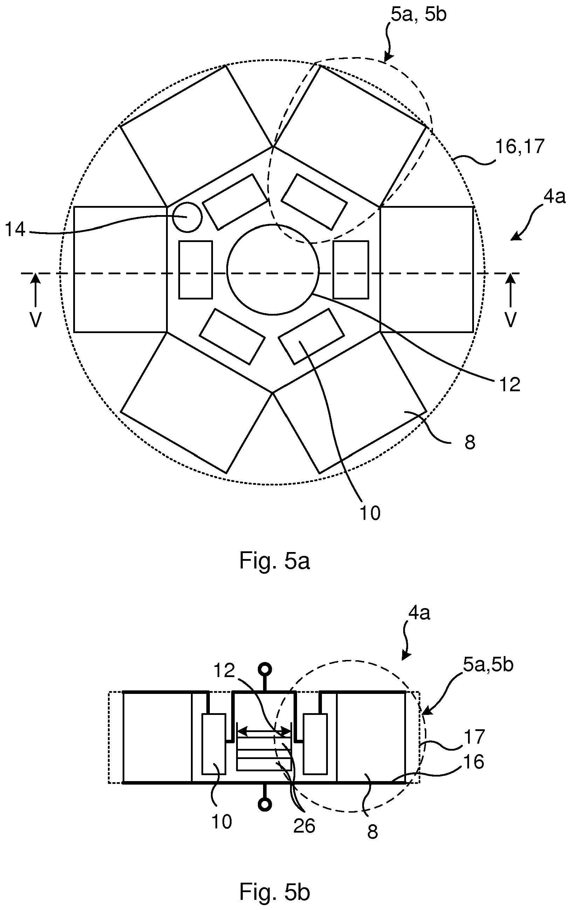

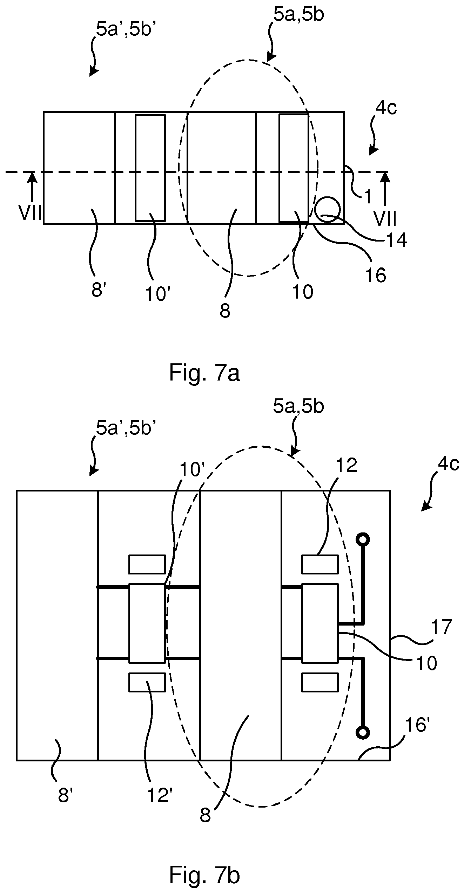

In the embodiments of the power electronics building block or modular multilevel converter cell 4a, 4b, 4c, 4d, as illustrated in figures 5a to 6b and 8a and 8b, the multilevel converter cell 4a, 4b, 4d comprises six sub cells 5a, 5b. In the embodiment as illustrated in figures 7a and 7b the multilevel modular converter cell 4c comprises two sub cells 5a, 5b, 5a', 5b'.

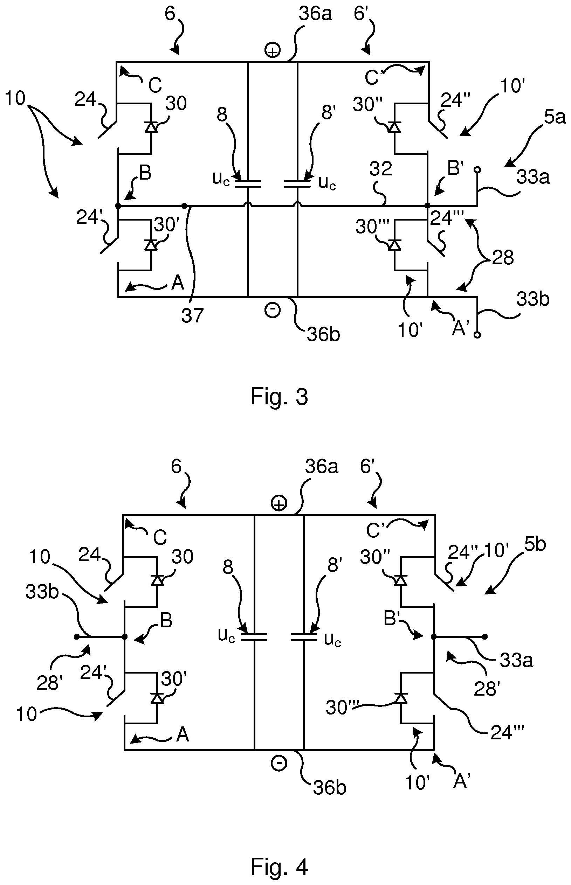

Turning now to figures 3 and 4, each sub cell 5a, 5b comprises two half bridge modules 6, 6', two conductor bridges 36a, 36b and a conductor arrangement 28, 28'.

The half bridge module 6 comprises a capacitor unit 8 with one or more capacitors 22 and a semiconductor unit 10 with at least two semiconductor switches 24, 24' and two diodes 30, 30' as best illustrated in figure 1. Each of the semiconductor switches 24, 24' is connected anti-parallel with one of the two diodes 30, 30'. One pair of semiconductor switch 24 and diode 30 is connected in series with the other pair of semiconductor switch 24' and diode 30'. The two pair of semiconductor switches 24, 24' and diodes 30, 30' are connected in series with the capacitor unit 8.

In figures 2 to 4 the semiconductor unit 10, 10' is shown to comprise two semiconductor switches 24, 24', 24", 24"', it is however possible that the semiconductor unit 10, 10' comprises more than only two semiconductor switches 24, 24', 24", 24"', for example four, six or eight, etc.

The conductor arrangement 28 may comprise a first and a second terminal portion 33a, 33b and an electric conductor 32 optionally comprising a mechanical breaker 37 as illustrated in figure 3.

Alternatively, the conductor arrangement 28' may only comprise the two terminal portions 33a, 33b, as illustrated in figure 4.

The half bridge module 6 illustrated in figure 1 can be configured to provide an output voltage of +U_{c} or zero, when the first and second terminal portions 33a, 33b, 33b'are connected.

In order to provide a half bridge module 6 one of the first and second terminal portions 33a may be connected at a position B, which corresponds to the midpoint between the two semiconductor switches 24, 24' and the other of the first and second terminal portions 33b, 33b' may either be connected on the negative side of the capacitor unit 8, in between the capacitor unit 8 or the capacitor 22 and the first semiconductor switch 24, at position C or on the positive side of the capacitor unit 8 or the capacitor 22 and the second semiconductor switch 24', at position A, illustrated as a dashed lined second terminal portion 32'. The positions A, B and C (and A', B', C') are illustrated in figures 1 to 4.

In order to provide a basic sub cell 5, as illustrated in figure 2, that can be configured as a half bridge sub cell 5a (c.f. figure 3) or a full bridge sub cell (c.f. figure 4), two half bridge modules 6, 6' are connected together in parallel, for example back-to-back with the capacitor unit 8 of one half bridge module 6 adjacent to the capacitor unit 8' of the other half bridge module 6'. A first conductor bridge 36a may be connected on the negative side of the capacitor units 8, 8', with one end in between the capacitor units 8, 8' and the semiconductor switch 24 of on half bridge module 6 and with the other end in between the capacitor unit 8' and the semiconductor switch 24" of the other half bridge module 6'. The second conductor bridge 36b may be connected on the positive side of the capacitor units 8, 8' with one end in between the capacitor unit 8 and the semiconductor switch 24' of on half bridge module 6 and with the other end in between the capacitor unit 8' and the semiconductor switch 24"' of the other half bridge module 6'.

The basic sub cell 5, as shown in figure 2, may comprise the electric conductor 32 with the mechanical breaker 37 and optionally a first or second terminal portion (not shown) fixedly connected to one of the midpoints in between two semiconductor switches 10, 10'. However, it is possible to provide the basic sub cell 5 without the first and second terminal portions and only with the electric conductor 32 with the mechanical breaker 37. In case the electric conductor 32 does not comprise a breaker 37 (not shown in the figures), the electric conductor 32 may not form part of the basic sub cell 5 and it may be delivered as a separate component together with the first- and second terminal portions 33a, 33b, so that the basic sub cell 5 can be configured as a half bridge or full bridge sub cell during assembly of the multilevel converter.

By connecting the first- and second terminal portions 33a, 33b at the positions A' and B' (figure 3) or at the two midpoints B, B' (figure 4) and by closing or opening the mechanical breaker 37, the basic sub cell 5 may now be employed as a half bridge configured sub cell 5a as shown in figure 3, or a full bridge configured sub cell 5b, as shown in figure 4.

The half- or full bridge configured sub cell 5a, 5b, 5a', 5b' provides thus for the modularity and flexibility of constructing a compact and versatile power electronics building block4a, 4b, 4c, 4d and thus modular multilevel converter with a few components, such as the basic sub cell 5, the first- and second terminal portions 33a, 33b and the electric conductor 32.

Using a sub cell 5a, 5b, 5a', 5b' as a basis for the modular multilevel converter facilitates the assembly, the maintenance, the storage of replacement parts management and enhances the flexibility during the build up and design of the converter itself.

As mentioned above, the basic sub cell 5 may comprise the two half bridge modules 6, 6', the electric conductor 32 with the mechanical breaker 37, the first and second conductor bridges 36a, 36b and the first terminal portion 33a fixedly connected to one of the two midpoints (B, B'). The second terminal portion 33b, may then be connected accordingly to the basic sub cell to either provide the full bridge sub cell 5b by connecting it at the free midpoint B, or the half bridge sub cell 5a, by closing the mechanical breaker 37 and by connecting the second terminal portion 32b at position A', as shown in figures 3 and 4, respectively. This arrangement represents an unclaimed example. It may be possible to provide two or more of the second terminal portions (not shown), whereby such second terminal portions may comprise breakers (not shown) and are fixedly installed at the above discussed positions A, A', B, B' and/or C, C'. In order to provide a full bridge 5b or half bridge sub cell 5a, the breakers of the second terminal portions would then need to be adjusted accordingly by opening or closing the breakers so that only one breaker of one second terminal portion is closed.

The basic sub cell 5 as illustrated in figure 2 can be configured as half bridge cell or full bridge sub cell 5a, 5b, 5a', 5b' by closing or opening the mechanical breaker 37 and by connecting the first- and second terminal portion 33a, 33b accordingly, as shown in figures 3 and 4.

In figure 4, the electric conductor 32 is removed; alternatively, the mechanical breaker 37 may just be opened (c.f. figure 2).

Turning now to figure 3, i the electric conductor 32 is connected in between the semiconductor switch 24, 24' and diode 30, 30' pair of one half bridge module 6 and the semiconductor switch 24", 24"' and diode 30", 30"' pair of the other half bridge module 6'. The electric conductor 32 does not engage or electrically connect with the electric conductors, which connect the capacitor units 8, 8' with the semiconductor units 10, 10' and the first and second conductor bridge 36a, 36b, respectively. The electric conductor 32 is galvanically connected to the half bridge modules 6, 6' at the midpoint B of one half bridge module 6 and at the midpoint B' of the other half bridge module 6'. The first terminal portion 33a is connected to one half bridge module at the midpoint B' or alternatively at the other midpoint (B) thus in between the semiconductor switch 24, 24' and diode 30, 30' pair of one half bridge module 6 or in between the semiconductor switch 24", 24"' and diode 30", 30"' pair of the other half bridge module 6'. The second terminal portion 33b is connected between the capacitor units 8, 8' and the semiconductor units 10, 10', of either of the two half bridge modules 6, 6'.

Depending on the switching state of the each semiconductor switch 24, 24', 24", 24"' the half bridge configured sub cell 5a according to figure 3 can now provide either +U_{c} or zero as output voltage.

Referring now to figure 4, which illustrates the full bridge configured sub cell 5b, the mechanical breaker (not shown) is open or alternatively, as shown in figure 4, the electric conductor 32 may be completely removed and the second terminal portion 33b is connected at the midpoint (B), in between the semiconductor switch 24, 24' and diode 30, 30' pair of one half bridge module 6. As the electric conductor 32 is not needed in this configuration, the conductor arrangement 28' comprises mainly of the first and second terminal portion 33a, 33b. As previously mentioned, the possible output voltage in this case may be +U_{c}, zero or -U_{c}, depending on the switching states of the semiconductor switches 10, 10'.

The first and second terminal portions 33a, 33b, the electric conductor 32, and the first and second conductor bridges 36a, 36b may be connected via plug/socket connections (not shown), which are pre-installed on the latter to pre-installed socket/plug connections (not shown) arranged on the (standard) sub cell 5, 5a, 5b and half bridge module 6, 6' respectively.

It may further be conceivable that, for example sockets on the basic sub cell 5 are sealed, prior to the assembly of the first and second terminal portions, so that the working personnel can only configure each standard or basic sub cell 5 according to a blue print of the modular multilevel converter.

In the following, when using the term sub cell 5a, 5b, half bridge configured sub cells 5a, full bridge configured sub cells 5b are meant, if not stated otherwise.

Referring now to figures 5a to 8b which show exemplary arrangements and configurations of different embodiment of multilevel converter cells 4a, 4b, 4c, 4d according to the invention, figure 5a illustrates a top down view on a circular multilevel converter cell 4a comprising six half bridge or full bridge configured sub cells 5a, 5b (or a mix thereof). The sub cells 5a, 5b are arranged circularly symmetric around the gate unit 12, which is centrally positioned on the base 16. The gate unit 12 may comprise gate drives 26, each of which is assigned to a semiconductor switch 24, 24', 24", 24"' (not illustrated in figure 5a and 5b). The components of the half- or full bridge configured sub cell 5a, 5b are indicated by the dashed line, which includes a part of the gate unit 12, the capacitor unit 8 and the semiconductor unit 10. In figure 5a is further shown a bypass portion 14, which may be used in case a bypass of the multilevel converter cell 4a is required. The sub cells 5a, 5b are fixed to the base 16, for example via pre-installed connecting portions (not shown) and complementary connecting portions (not shown).

Figure 5b illustrates the bus bars which interconnect the components of the modular multilevel converter cell 4a and which connect to a previous and subsequent multilevel converter cell (not shown) respectively. Further, as can be seen in figure 5b the gate unit 12 may be divided into two parts, for example for improved cooling. Each part may comprise a plurality of gate drives 26.

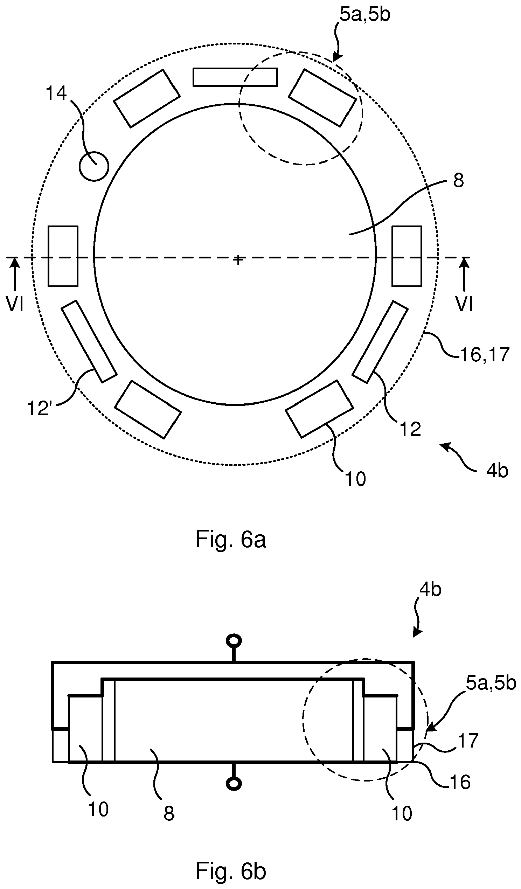

Turning now to figures 6a and 6b, which illustrate the multilevel converter cell 4b according to the invention with another design or layout, whereby the capacitor units 8 of the sub cells 5a, 5b (half- or full bridge configured or a mix thereof) are arranged in the centre of the circular multilevel converter cell 4b. The gate unit 12 or in this case the plurality of gate units 12, 12' are each assigned to two sub cells 5a, 5b, as illustrated by the dashed line encircling the a part of the semiconductor unit 12, the capacitor unit 8 and the semiconductor unit 10, whereby the semiconductor units 10, of each sub cell 5a, 5b are arranged next to the corresponding gate unit 12, 12' on or close to a periphery of the circular base 16.

Also in this layout or design, the components, namely the capacitor unit 8, the semiconductor units 10, and the gate units 12, 12' are arranged in circular symmetric design.

Figures 7a and 7b illustrate another layout of a multilevel converter cell 4c comprising two half bridge- or full bridge configured sub cells 5a, 5b, 5a', 5b' arranged on a rectangular base plate in a straight line one sub cell 5a', 5b' after the other sub cell 5a, 5b. In the embodiment illustrated in figures 7a and 7b, the sub cells 5a, 5b, 5a', 5b' are arranged one after the other, whereby the capacitor unit 8' of the first sub cell 5a', 5b' is arranged next to the semiconductor unit 10' and the gate unit 12', which is followed by the capacitor unit 8 and the semiconductor and gate unit 10, 12 of the second sub cell 5a, 5b.

Figure 7b illustrates the bus bar connections of the two sub cells 5a, 5b, 5a', 5b' including the terminals that may be connected to the previous and subsequent multilevel converter cells (not shown). Regarding the embodiment illustrated in figure 7b, it is conceivable to provide more than two sub cells 5a, 5b, 5a', 5b' arranged in a row. Additionally, the orientation of the sub cells 5a, 5b, 5a', 5b' may be changed so that the semiconductor and gate unit 10', 12' of the first sub cell 5a', 5b' are facing the semiconductor unit and gate unit 10, 12 of the second sub cell 5a, 5b. The sub cells 5a, 5b, 5a', 5b' may thus be arranged in a mirrored manner with the capacitor units 8, 8' being arranged facing an outer side of the multilevel converter cell 4c.

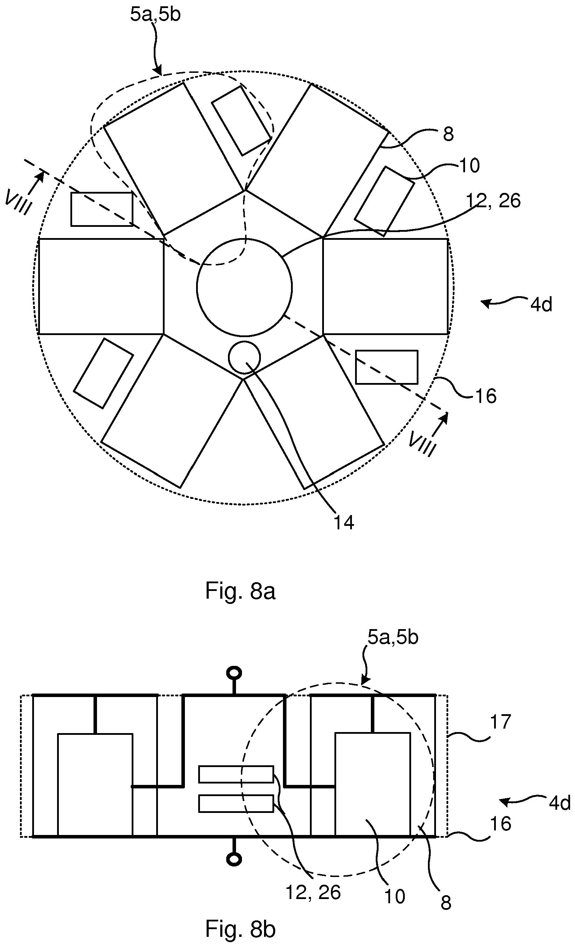

Figures 8a and 8b illustrate once more a circularly symmetric design of the multilevel converter cell 4d. The gate unit 12 is arranged in the middle or centre of the circular multilevel converter cell 4d and the semiconductor units 10 and capacitor units 8 are arranged circularly symmetric on the periphery around the gate unit 12. The base 16 is again chosen to be circular. The gate unit 12 with its gate drives 26 may be divided into two parts slightly spaced apart from one another, for example for better cooling. Again, the components of the half- or full bridge configured sub cell 5a, 5b, namely the gate unit 12, 12', the capacitor unit 8, 8' and the semiconductor unit 10, 10' are encircled by the dashed line.

All the embodiments illustrated in figures 5a to 8b may comprise a bypass portion 14 for bypassing the multilevel converter cell 4a, 4b, 4c, 4d when it is not needed.

In addition, each of the multilevel converter cells 4a, 4b, 4c, 4d as illustrated in the figures may be sealed by the hermetically sealed casing 17 that may be connected to the base 16. The base 16 may alternatively be integrated in the hermetically sealed casing 17, as illustrated in figures 5b, 6b, 7b and 8b.

The illustrated embodiments of the sub cells 5a, 5b, 5a', 5b' and the layouts or design of the modular multilevel converter cells 4a, 4b, 4c, 4d provide for a compact and robust design. The radius of a circular layout of the modular multilevel converter cell 4a, 4b, 4c, 4d may be as small as 600mm. The height of the modular multilevel converter cells 4a, 4b, 4c, 4d may be as small as 250mm.

The rectangular embodiment of the modular multilevel converter cell 4c, as illustrated in figures 7a and 7b may have a width and length of 300mm times 1300mm and a height of 800mm.

Although indications of the dimensions of the modular multilevel converter cell 4a, 4b, 4c, 4d are given above, it falls within the scope of the invention to provide modular multilevel converter cells 4a, 4b, 4c, 4d or sub cells 5a, 5b, 5a', 5b' with other dimensions.

In the figures and the detailed description the gate unit 12 and the gate drives 26 has been shown as not being integrated in the sub cells 5a, 5b, 5a', 5b' or the basic sub cell 5. However, optionally the gate drives and thus parts of the gate unit may be integrated in the sub cells 5a, 5b, 5a', 5b' and the basic sub cell 5, respectively.

Further, the multilevel converter may comprise a cooling system (not shown), whereby the sub cells 5a, 5b, 5a', 5b' and the basic sub cell 5, respectively are provided with elements (not shown) configured to be connected to the cooling system. The cooling system or parts of the cooling system may thus be integrated in the building kit or the modular design of the modular multilevel converter and multilevel converter cell 4a, 4b, 4c, 4d, respectively.

The sub cells 5, 5a, 5b, 5a', 5b' may further comprise corona shield elements (not shown) so that the multilevel converter cell 4a, 4b, 4c, 4d does not need to be additionally shielded during or after the assembly. The corona shield elements may preferably be arranged close or adjacent to the capacitor unit 8.

The (basic) sub cell 5, 5a, 5b in figures 2-4 is illustrated comprising two capacitor units 8, 8', it is however conceivable and falls within the scope of the invention to merge these two capacitor units 8, 8' into one capacitor unit and thus as one energy storing capacitor.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A power electronics building block (4a, 4b, 4c, 4d) for a multilevel converter comprising:
- at least two half bridge modules (6, 6'), each having a capacitor unit (8, 8') and at least two semiconductor switches (24, 24', 24", 24"');
- a gate unit (12, 12') configured to control the semiconductor switches;
- a conductor arrangement (28, 28') comprising an electric conductor (32) and at least a first and second terminal portions (33a, 33b);
- first and second conductor bridges (36a, 36b); and
- a sub cell (5, 5a, 5b, 5a', 5b');
wherein the sub cell (5, 5a, 5b, 5a', 5b') comprises said at least two half bridge modules connected in parallel, the conductor arrangement is configured to be connected to the sub cell in at least two different ways in order to provide a half bridge configured sub cell (5a, 5a') or a full bridge configured sub cell (5b, 5b') for the power electronics building block (4a, 4b, 4c, 4d) and the two half bridge modules are connected in parallel by the first and the second conductor bridges,
wherein either there are at least a first and two or more second terminal portions and the electric conductor (32) comprises a mechanical breaker (37), where said electric conductor with mechanical breaker and said at least a first and two or more second terminal portions are fixedly connected to the sub cell and the second terminal portions comprise breakers,
or the sub cell comprises connecting sockets at the correct positions, so that the electric conductor, the first and a second terminal portions, and the conductor bridges may be connected to the sub cell via plugs.

2. The power electronics building block (4a, 4b, 4c, 4d) according to claim 1, comprising at least two parallel connected sub cells, wherein the sub cells are arranged symmetrically with respect to each other.

3. The power electronics building block (4a, 4b, 4d) according to claim 1 or 2, comprising a plurality of parallel connected sub cells, wherein the sub cells are arranged circularly symmetric with respect to each other.

4. The power electronics building block according to any of the previous claims, wherein the gate unit comprises gate drives (26), each of the gate drives being assigned to control a semiconductor switch.

5. The power electronics building block according to the previous claim 4, wherein the gate drives are integrated in the sub cell.

6. The power electronics building block according to claim 4, wherein the gate drives are separate from the sub cell.

7. The power electronics building block according to any of the previous claims, wherein the mechanical breaker is either in a closed or open position in order to provide a half bridge- or a full bridge configured sub cell.

8. The power electronics building block according to the previous claim 7, wherein the electric conductor is connected with a first end at a first midpoint (B) in between the two semiconductor switches (24, 24') of one half bridge module (6) and with a second end at a second midpoint (B') in between the two semiconductor switches (24", 24"') of the other half bridge module (6').

9. The power electronics building block according to any of the previous claims, wherein each sub cell and/or power electronics building block as a whole comprises a corona shield element.

10. The power electronics building block according to any of the previous claims, wherein the semiconductor switches may be IGBT's, bimode insulated gate transistors (BIGT), metal oxide semiconductor field effect transistors (MOSFETT), gate turn-off thyristors, or IGCT's.

11. The power electronics building block according to the previous claim 10, wherein the semiconductor switches may be silicon based or silicon carbide based.

12. The power electronics building block according to any of the previous claims, wherein the semiconductor switches are integrated in the capacitor unit.

13. The power electronics building block according to any of the previous claims, comprising at least one diode (30, 30', 30", 30"'), wherein the diode is assigned to each of the semiconductor switches.

14. A multilevel converter comprising several power electronics building blocks according to any of claims 1 to 13, connected in series.

## Patentansprüche

1. Leistungselektronikbaustein (4a, 4b, 4c, 4d) für einen Multilevel-Stromrichter, der Folgendes umfasst:
- wenigstens zwei Halbbrückenmodule (6, 6'), von denen jedes eine Kondensatoreinheit (8, 8') und wenigstens zwei Halbleiterschalter (24, 24', 24", 24"') aufweist;
- eine Gate-Einheit (12, 12'), die zum Steuern der Halbleiterschalter konfiguriert ist;
- eine Leiteranordnung (28, 28'), die einen elektrischen Leiter (32) und wenigstens einen ersten und zweiten Anschluss teil (33a, 33b) umfasst;
- erste und zweite Leiterbrücken (36a, 36b); und
- eine Unterzelle (5, 5a, 5b, 5a', 5b'),
wobei die Unterzelle (5, 5a, 5b, 5a', 5b') wenigstens zwei Halbbrückenmodule in Parallelschaltung umfasst, wobei die Leiteranordnung dazu konfiguriert ist, mit der Unterzelle auf wenigstens zwei verschiedene Arten verbunden zu werden, um eine als Halbbrücke konfigurierte Unterzelle (5a, 5a') oder eine als Vollbrücke konfigurierte Unterzelle (5b, 5b') für den Leistungselektronikbaustein (4a, 4b, 4c, 4d) bereitzustellen, und die zwei Halbbrückenmodule durch die erste und die zweite Leiterbrücke parallel verbunden sind,
wobei
es entweder wenigstens einen ersten und zwei oder mehr zweite Anschlussteile gibt und der elektrische Leiter (32) einen mechanischen Trenner (37) umfasst, wobei der elektrische Leiter mit dem mechanischen Trenner und der wenigstens eine erste und die zwei oder mehr zweiten Anschlussteile fest mit der Unterzelle verbunden sind und die zweiten Anschlussteile Trenner umfassen,
oder die Unterzelle Verbindungsockel an den korrekten Positionen umfasst, sodass der elektrische Leiter, der erste und ein zweiter Anschlussteil und die Leiterbrücken über Stecker mit der Unterzelle verbunden werden können.

2. Leistungselektronikbaustein (4a, 4b, 4c, 4d) nach Anspruch 1, der wenigstens zwei parallel verbundene Unterzellen umfasst, wobei die Unterzellen mit Bezug aufeinander symmetrisch angeordnet sind.

3. Leistungselektronikbaustein (4a, 4b, 4d) nach Anspruch 1 oder 2, der mehrere parallel verbundene Unterzellen umfasst, wobei die Unterzellen mit Bezug aufeinander zirkular symmetrisch angeordnet sind.

4. Leistungselektronikbaustein nach einem der vorhergehenden Ansprüche, wobei die Gate-Einheit Gate-Treiber (26) umfasst, wobei jeder der Gate-Treiber zum Steuern eines Halbleiterschalters zugewiesen ist.

5. Leistungselektronikbaustein nach dem vorherigen Anspruch 4, wobei die Gate-Treiber in der Unterzelle integriert sind.

6. Leistungselektronikbaustein nach Anspruch 4, wobei die Gate-Treiber separat von der Unterzelle sind.

7. Leistungselektronikbaustein nach einem der vorhergehenden Ansprüche, wobei sich der mechanische Trenner entweder in einer geschlossenen oder offenen Position befindet, um eine als Halbbrücke oder als Vollbrücke konfigurierte Unterzelle bereitzustellen.

8. Leistungselektronikbaustein nach dem vorherigen Anspruch 7, wobei der elektrische Leiter mit einem ersten Ende an einem Mittelpunkt (B) zwischen den Halbleiterschaltern (24, 24') eines Halbbrückenmoduls (6) und mit einem zweiten Ende an einem zweiten Mittelpunkt (B') zwischen den Halbleiterschaltern (24 24''') des anderen Halbbrückenmoduls (6') verbunden ist.

9. Leistungselektronikbaustein nach einem der vorhergehenden Ansprüche, wobei jede Unterzelle und/oder der Leistungselektronikbaustein als Ganzes ein Glimmschutzelement umfasst.

10. Leistungselektronikbaustein nach einem der vorhergehenden Ansprüche, wobei die Leistungsschalter IGBTs, Bi-Modus Transistoren mit isoliertem Gate (BIGT: Bimode Insulated Gate Transistors), Metall-Oxid-Halbleiter-Feldeffekttransistoren (MOSFET: Metal Oxide Semiconductor Field Effect Transistor), Gate-Ausschalt-Thyristoren oder IGCTs sein können.

11. Leistungselektronikbaustein nach dem vorigen Anspruch 10, wobei die Halbleiterschalter siliciumbasiert oder siliciumcarbidbasiert sein können.

12. Leistungselektronikbaustein nach einem der vorhergehenden Ansprüche, wobei die Halbleiterschalter in der Kondensatoreinheit integriert sind.

13. Leistungselektronikbaustein nach einem der vorhergehenden Ansprüche, der wenigstens eine Diode (30, 30', 30", 30"') umfasst, wobei die Diode jedem der Halbleiterschalter zugewiesen ist.

14. Multilevel-Stromrichter, der mehrere Leistungselektronikbausteine nach einem der Ansprüche 1 bis 13 umfasst, die in Reihe verbunden sind.

## Revendications

1. Bloc constitutif d'électronique de puissance (4a, 4b, 4c, 4d) pour un convertisseur multiniveau comprenant :
- au moins deux modules en demi-pont (6, 6'), chacun ayant une unité de condensateur (8, 8') et au moins deux commutateurs à semi-conducteurs (24, 24', 24", 24"') ;
- une unité de grille (12, 12') configurée pour contrôler les commutateurs à semi-conducteurs ;
- un agencement de conducteur (28, 28') comprenant un conducteur électrique (32) et au moins une première et une deuxième partie de borne (33a, 33b) ;
- des premier et deuxième ponts conducteurs (36a, 36b) ; et
- une sous-cellule (5, 5a, 5b, 5a', 5b') ;
dans lequel la sous-cellule (5, 5a, 5b, 5a', 5b') comprend lesdits au moins deux modules en demi-pont branchés en parallèle, l'agencement de conducteur est configuré pour être branché à la sous-cellule au moins de deux manières différentes afin d'obtenir une sous-cellule configurée en demi-pont (5a, 5a') ou une sous-cellule configurée en pont complet (5b, 5b') pour le bloc constitutif d'électronique de puissance (4a, 4b, 4c, 4d) et les deux modules en demi-pont sont branchés en parallèle par le premier et le deuxième pont conducteur,
dans lequel
soit il y a au moins une première et au moins deux deuxièmes parties de borne et le conducteur électrique (32) comprend un disjoncteur mécanique (37), ledit conducteur électrique avec disjoncteur mécanique et lesdites au moins une première et au moins deux deuxièmes parties de borne sont branchées de façon fixe à la sous-cellule et les deuxièmes parties de borne comprennent des disjoncteurs,
soit la sous-cellule comprend des prises de branchement aux bonnes positions, de telle sorte que le conducteur électrique, les premières et deuxièmes parties de borne et les ponts conducteurs peuvent être branchés à la sous-cellule par des fiches.

2. Bloc constitutif d'électronique de puissance (4a, 4b, 4c, 4d) selon la revendication 1, comprenant au moins deux sous-cellules branchées en parallèle, les sous-cellules étant disposées symétriquement l'une par rapport à l'autre.

3. Bloc constitutif d'électronique de puissance (4a, 4b, 4d) selon la revendication 1 ou 2, comprenant une pluralité de sous-cellules branchées en parallèle, les sous-cellules étant disposées en symétrie circulaire les unes par rapport aux autres.

4. Bloc constitutif d'électronique de puissance selon l'une quelconque des revendications précédentes, dans lequel l'unité de grille comprend des commandes de grille (26), chacune des commandes de grille étant affectée au contrôle d'un commutateur à semi-conducteurs.

5. Bloc constitutif d'électronique de puissance selon la revendication 4 précédente, dans lequel les commandes de grille sont intégrées dans la sous-cellule.

6. Bloc constitutif d'électronique de puissance selon la revendication 4, dans lequel les commandes de grille sont séparées de la sous-cellule.

7. Bloc constitutif d'électronique de puissance selon l'une quelconque des revendications précédentes, dans lequel le disjoncteur mécanique est dans une position fermée ou ouverte afin d'obtenir une sous-cellule configurée en demi-pont ou en pont complet.

8. Bloc constitutif d'électronique de puissance selon la revendication 7 précédente, dans lequel le conducteur électrique est branché à une première extrémité à un premier point central (B) entre les deux commutateurs à semi-conducteurs (24, 24') d'un module en demi-pont (6) et à une deuxième extrémité à un deuxième point central (B') entre les deux commutateurs à semi-conducteurs (24", 24"') de l'autre module en demi-pont (6').

9. Bloc constitutif d'électronique de puissance selon l'une quelconque des revendications précédentes, dans lequel chaque sous-cellule et/ou bloc constitutif d'électronique de puissance dans son ensemble comprend un élément de protection anti-effluves.

10. Bloc constitutif d'électronique de puissance selon l'une quelconque des revendications précédentes, dans lequel les commutateurs à semi-conducteurs peuvent être des IGBT, des transistors bimodes à grille isolée (BIGT), des transistors à effet de champ métal-oxyde-semiconducteur (MOSFET), des thyristors interrupteurs, ou des IGCT.

11. Bloc constitutif d'électronique de puissance selon la revendication 10 précédente, dans lequel les commutateurs à semi-conducteurs peuvent être à base de silicium ou à base de carbure de silicium.

12. Bloc constitutif d'électronique de puissance selon l'une quelconque des revendications précédentes, dans lequel les commutateurs à semi-conducteurs sont intégrés dans l'unité de condensateur.

13. Bloc constitutif d'électronique de puissance selon l'une quelconque des revendications précédentes, comprenant au moins une diode (30, 30', 30", 30"'), la diode étant affectée à chacun des commutateurs à semi-conducteurs.

14. Convertisseur multiniveau comprenant plusieurs blocs constitutifs d'électronique de puissance selon l'une quelconque des revendications 1 à 13, branchés en série.
